# EUROPÄISCHE PATENTANMELDUNG

(11) **EP 1 616 754 A1**
(43) Veröffentlichungstag der Anmeldung: **18.01.2006**
(21) Anmeldenummer: 05106191.9
(22) Anmeldetag: 07.07.2005
(51) Int. Cl.: B60Q 3/02, F21V 9/08

(54) **Leseleuchte für ein Fahrzeug**

(30) Priorität: 12.07.2004 EP 04016339; 20.07.2004 US 589002 P
(71) Anmelder: Goodrich Hella Aerospace Lighting Systems GmbH, 59557 Lippstadt (DE)
(72) Erfinder: Bigge, Guido, 59846, Sundern (DE); Haacke, Oliver, 59558, Lippstadt (DE); Schulz, Rico, 59558, Lippstadt (DE)
(74) Vertreter: Hilleringmann, Jochen

(57) **Zusammenfassung**

Die Leseleuchte für ein Fahrzeug, insbesondere zum Einbau oberhalb eines Fahrzeugsitzes eines Fahrzeuges wie z.B. eines Flugzeuges ist versehen mit mindestens einer weißes Licht emittierenden LED (22) und einem Reflektor (18) und/oder einer Lichtscheibe (14), wobei der Reflektor (18) und/oder die Lichtscheibe (14) mit einer Beschichtung (20,26) versehen ist, die dasjenige Licht der mindestens einen LED (22) absorbiert oder in seiner Intensität reduziert, dessen Wellenlänge kleiner als ein vorgebbarer Wellenlängenwert ist.

## Beschreibung

Die Erfindung betrifft eine Leseleuchte für ein Fahrzeug und insbesondere eine Leseleuchte, die zum Einbau oberhalb eines Fahrgastsitzes eines Fahrzeuges geeignet ist. Bei diesem Fahrzeug handelt es sich beispielsweise um einen Reisebus und insbesondere um ein Flugzeug.

Fahrzeug-Leseleuchten weisen im allgemeinen Halogenlampen auf, die "warmes" Licht aussenden und somit als angenehm empfunden werden. Dieses Empfinden basiert unter anderem auch auf der menschlichen Augenempfindlichkeit, da das menschliche Auge im Bereich von Wellenlängen zwischen etwa 380 nm und 780 nm sensitiv ist.

In zunehmendem Maße werden in Fahrzeugen als Lichtquellen LEDs eingesetzt. Insbesondere nachdem in den letzten Jahren weißes Licht aussendende LEDs im Markt erhältlich sind, ist ein noch verstärkter Trend zur Applikation von LEDs in Fahrzeugen zu beobachten.

Im Gegensatz zu Halogenlampen emittieren LEDs insbesondere im kurzwelligen Wellenlängenbereich (etwa 380 nm bis ca. 510 nm) relativ stark. Da, wie oben dargestellt, das menschliche Auge in diesem Bereich ebenfalls sensitiv ist, wird das weiße Licht einer LED als "kalt" empfunden.

Um mit LED-Technologie "warmes" Licht zu erzeugen, war man bisher bemüht, relativ schmalbandig emittierende LEDs einzusetzen, die eben nicht im "kalten" Wellenlängenbereich Licht aussenden. Man ist dem Problem der "kalten Strahlung" bei LEDs also bisher dadurch entgegengetreten, dass außerhalb dieses Wellenlängenbereichs emittierende LEDs eingesetzt wurden.

EP 1 190 903 A2 beschreibt eine Flugzeug-Leseleuchte mit einer Filterfunktion, die sich lediglich auf das ambiente Licht beschränkt, welches keinen Einfluss auf die auszuleuchtende Zielfläche hat. Das ursprünglich emittierte Licht wird durch Transmission durch das Filter manipuliert. Es ist kein Reflektor im eigentlichen Sinn verantwortlich für die Veränderung der Lichtfarbe. Beide Funktionen, Reflektion/Lichtweiterleitung und Filterung/Manipulation der Lichtfarbe, sind körperlich voneinander getrennt. Zudem wird nicht die Gesamtheit des abgestrahlten Lichtes manipuliert. Es handelt sich nur um eine geringe Teilmenge des Gesamtlichtstroms der LED, welche durch den Filter verändert wird.

US 2003/0133292 A1 beschreibt die additive Farbmischung von RGB LEDs. Es wird also betrachtet, welcher Effekt bei der Mischung von unterschiedlichen Lichtfarben schmalbandig abstrahlender Lichtquellen entsteht. Für den Fall der Mischung von Rot, Grün und Blau entsteht somit weißes Licht.

US 5,353,210 beschreibt im Prinzip eine Kaltlichtreflektorlampe. Die Lichtquelle ist eine Entladungslampe und der Reflektor hat neben der Reflektion des sichtbaren Lichtes die Aufgabe, den nicht sichtbaren Anteil des Lichtes nicht zu reflektieren. Im Speziellen soll also die Beschichtung den gesundheitsschädlichen UV-Anteil des erzeugten Lichtes absorbieren und nicht auf den auszuleuchtenden Zielbereich reflektieren.

US 2001/0000622 A1 beschreibt die Erzeugung von weißem Licht durch einen Halbleiter, welcher blaues emittiert, und der additiven Farbmischung mit einem Konversionsmaterial, welches ein gelbes Licht generiert. Dabei ist die Originalemission in blau eine spektral schmalbandige Emission. Das vom Konversionsmaterial erzeugte gelbe Licht ist spektral sehr breitbandig. Die Addition aus beidem ergibt weißes Licht.

Nach US 6,132,072 wird ähnlich wie bei US 2003/0133292 A1 durch die additive Farbmischung von mindestens zwei Lichtfarben die Lichtfarbe weiß erzeugt. Diese bekannte Leuchte ist ebenfalls vom Grundgedanken her eine RGB-Leuchte. Das Design einer Leuchte lässt eine aktive und zeitnahe Manipulation der Lichtfarbe über das Verändern der elektrischen Randbedingungen zu. Der Reflektor, welcher in diesem Design enthalten ist, spielt dabei eine nebensächliche Rolle.

US 4,042,818 beschreibt eine Glühlampe als Lichtquelle. Die Lichtfarbe wird in diesem Fall durch Transmission manipuliert. Das transmittierte Licht wird über den Reflektor auf den Zielbereich gelenkt. Es existiert also eine Funktionstrennung zwischen Lichtlenkung und Farbmanipulation. Zudem ist keine besondere Beschichtung des Reflektors erwähnt, welche besondere spektrale Eigenschaften vorweisen würde.

Eine Aufgabe der Erfindung ist es, eine Leseleuchte für ein Fahrzeug zu schaffen, die trotz Verwendung einer weißes Licht aussendenden LED dennoch eine als angenehm empfundene Lichtabstrahlung aufweist.

Zur Lösung dieser Aufgabe wird mit der Erfindung eine Leseleuchte für ein Fahrzeug, insbesondere zum Einbau oberhalb eines Fahrgastsitzes eines Fahrzeuges wie z.B. eines Flugzeuges, vorgeschlagen, wobei die Leseleuchte versehen ist mit
- mindestens einer weißes Licht emittierenden LED und
- einem Reflektor und/oder einer Lichtscheibe,
- wobei der Reflektor und/oder die Lichtscheibe mit einer Beschichtung versehen ist, die dasjenige Licht der mindestens einen LED, dessen Wellenlänge kleiner als ein vorgebbarer Wellenlängenwert ist, absorbiert oder in seiner Intensität reduziert.

Die erfindungsgemäße Lösung besteht also darin, den "Kaltanteil" der mindestens einen weißes Licht emittierenden LED der Leseleuchte auszublenden bzw. in seiner Intensität zu reduzieren. Dies erfolgt erfindungsgemäß durch eine Beschichtung, die entweder auf einem Reflektor (sofern die Leseleuchte einen Reflektor aufweist) oder auf der Lichtscheibe der Leseleuchte aufgebracht ist. Die Beschichtung kann auch sowohl auf der Lichtscheibe als auch, sofern vorhanden, auf dem Reflektor aufgebracht sein.

Im einfachsten Fall handelt es sich bei der Beschichtung um einen Farbauftrag. Es ist aber auch möglich, Materialien einzusetzen, die lichtphysikalisch so arbeiten, dass sie Licht bestimmter Wellenlängenbereiche bzgl. dessen Intensität reduzieren also zumindest teilweise absorbieren. Hier bietet sich beispielsweise eine Kupfer- oder gar Goldbeschichtung an.

Die erfindungsgemäße Leseleuchte entspricht insofern nicht dem allgemeinen Trend bei der Applikation von weißes Licht aussendenden LEDs, als nach der Erfindung dieses weiße Licht teilweise wieder herausgefiltert bzw. absorbiert wird. Vorzugsweise erfolgt die Absorption/Intensitätsreduktion in einem Wellenlängenbereich von etwa 380 nm bis etwa 510 nm, wobei die LED Licht vorzugsweise im Wellenlängenbereich von etwa 380 nm bis etwa 780 nm emittiert.

Die Erfindung wird nachfolgend unter Bezugnahme auf die Zeichnung näher erläutert. Im einzelnen zeigen:
- Fig. 1: ein erstes Ausführungsbeispiel einer erfindungsgemäßen Leseleuchte mit beschichtetem Reflektor,
- Fig. 2: ein zweites Ausführungsbeispiel der Erfindung mit beschichteter Lichtscheibe und
- Fig. 3: Intensitätsverteilungen der verwendeten LED, der Beschichtung und des resultierenden emittierten Lichts.

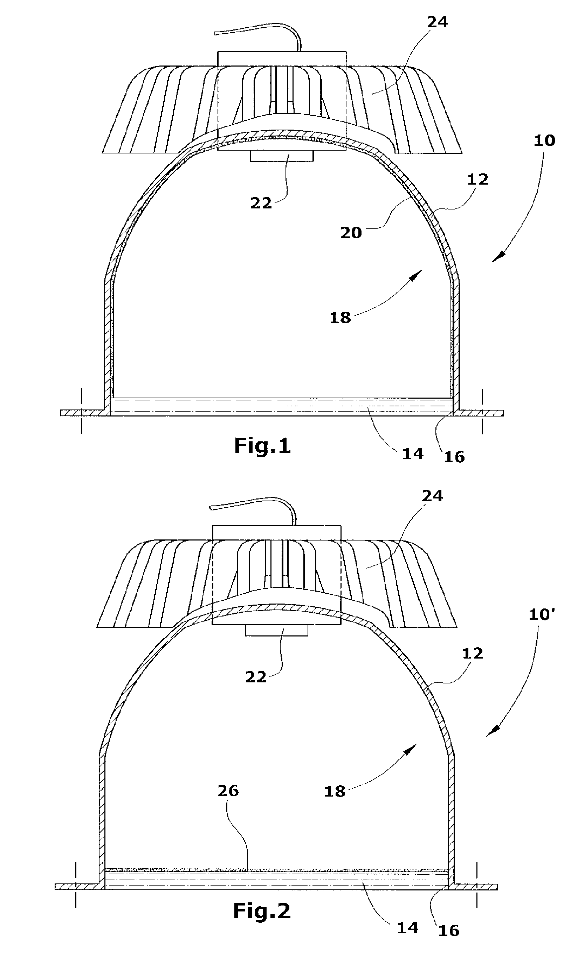

Fig. 1 zeigt ein erstes Ausführungsbeispiel einer Leseleuchte 10 im Querschnitt, die ein Gehäuse 12 mit einer durch eine Lichtscheibe 14 verschlossene Lichtaustrittsöffnung 16 aufweist. Das Gehäuse 12 ist als Reflektor 18 ausgebildet, der eine lichtabsorbierende bzw. intensitätsreduzierende Beschichtung 20 aufweist.

Als Leuchtmittel der Leseleuchte 10 dient eine LED bzw. ein LED-Modul (das heißt mehrere LED-Chips auf einem gemeinsamen Header) 22, welche bzw. welches weißes Licht, also Licht in einem Wellenlängenbereich von etwa 400 nm bis 800 nm aussendet. Die LED bzw. das LED-Modul 22 wird mittels eines Kühlkörpers 24 gekühlt.

Das emittierte weiße Licht wird durch die Beschichtung 20 des Reflektors 18 innerhalb eines Wellenlängenbereichs von etwa 400 nm bis etwa 510 nm intensitätsreduziert bzw. absorbiert. Damit tritt aus der Lichtscheibe Licht innerhalb dieses Wellenlängenbereichs, sofern es vom Reflektor 18 reflektiert ist, nicht aus. Um auch das direkt durch die Lichtescheibe 14 austretende Licht der LED bzw. des LED-Moduls 22 filtern zu können, ist es zweckmäßig, wenn die Lichtscheibe 14 zumindest in ihrem Zentrum und im zentralen Bereich eine entsprechende Beschichtung aufweist.

Fig. 2 zeigt eine alternative Ausgestaltung einer Leseleuchte 10', die ebenfalls ein Gehäuse 12 mit einer von einer Lichtscheibe 14 verschlossenen Lichtaustrittsöffnung 16 aufweist. Die Leseleuchte 10' weist ebenfalls eine LED bzw. ein LED-Modul (das heißt mehrere LED-Chips auf einem gemeinsamen Header) 22 auf, die bzw. das weißes Licht aussendet. Ferner weißt die Leseleuchte 10' ebenfalls einen Kühlkörper 24 für die LED bzw. das LED-Modul 22 auf.

Im Unterschied zur Leseleuchte 10 nach Fig. 1 ist der Reflektor 18 nicht mit einer Licht in einem bestimmten Wellenlängenbereich absorbierenden Beschichtung versehen, wie sie oben im Zusammenhang mit dem Ausführungsbeispiel nach Fig. 1 beschrieben ist. Eine derartige Beschichtung 26 ist vielmehr bei der Leseleuchte 10' gemäß Fig. 2 Bestandteil der Lichtscheibe 14, indem diese Beschichtung beispielsweise auf der Innenseite der Lichtscheibe 14 aufgebracht ist. Die Beschichtung 26 sorgt für eine Absorption bzw. Reflektion von Licht innerhalb des Wellenlängenbereichs von etwa 380 nm bis ca. 500 nm.

Als Materialien für die Beschichtungen 20 und 26 kommen dichroitisch wirkende Materialien bzw. Farbmaterialien in Frage. Diese Materialien absorbieren (Reduktion der Intensität) bzw. reflektieren Licht innerhalb bestimmter Wellenlängenbereiche, das heißt sind für andere Wellenlängenbereiche transmissiv.

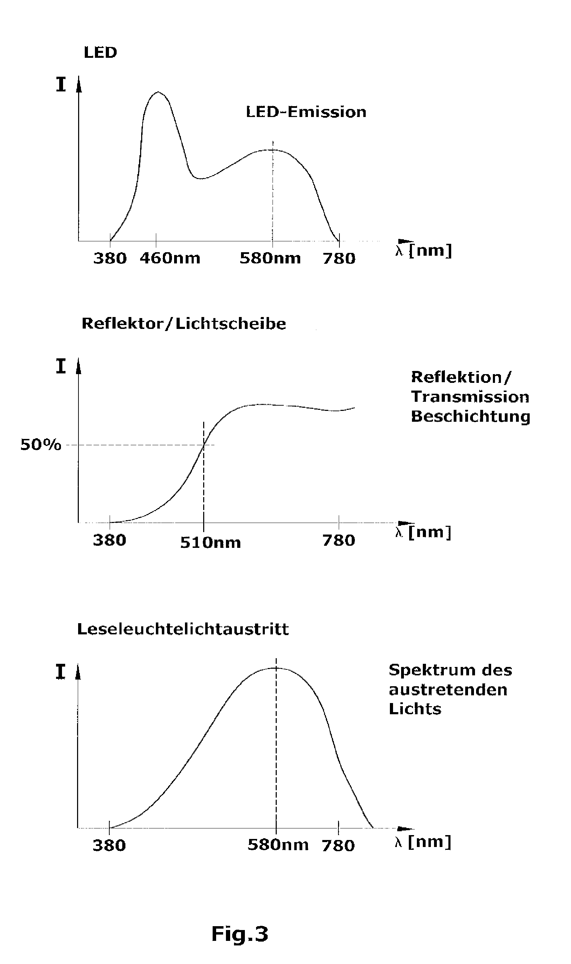

Fig. 3 zeigt die Kurven der Lichtemission (Intensität über der Wellenlänge) der LED bzw. des LED-Moduls 22, der Reflektion bzw. Transmission der Beschichtung 20,26 und das resultierende Spektrum des ausgesandten Lichts.

## Patentansprüche

1. Leseleuchte für ein Fahrzeug, insbesondere zum Einbau oberhalb eines Fahrzeugsitzes eines Fahrzeuges wie z.B. eines Flugzeuges mit
- mindestens einer weißes Licht emittierenden LED (22) und
- einem Reflektor (18) und oder einer Lichtscheibe (14),
- wobei der Reflektor (18) und/oder die Lichtscheibe (14) mit einer Beschichtung (20,26) versehen ist, die dasjenige Licht der mindestens einen LED (22), dessen Wellenlänge kleiner als ein vorgebbarer Wellenlängenwert ist, absorbiert oder in seiner Intensität reduziert.

2. Leseleuchte nach Anspruch 1, **dadurch gekennzeichnet, dass** die mindestens eine LED Licht zumindest im Wellenlängenbereich von etwa 380 nm bis etwa 780 nm emittiert und dass die Beschichtung Licht im Wellenlängenbereich unterhalb von etwa 500 nm absorbiert oder bzgl. seiner Intensität reduziert.
